# EUROPEAN PATENT APPLICATION

(11) **EP 4 382 337 A2**
(43) Date of publication of application: **12.06.2024**
(21) Application number: 23209691.7
(22) Date of filing: 14.11.2023
(51) Int. Cl.: B60K 35/81

(54) **OPERATION DEVICE**

(30) Priority: 05.12.2022 JP 2022194373
(71) Applicant: TOYO DENSO KABUSHIKI KAISHA, Minato-ku Tokyo 105-0004 (JP)
(72) Inventor: ITO, Kazumasa, Tsurugashima-shi, 350-2280 (JP); SAKURAI, Masaki, Tsurugashima-shi, 350-2280 (JP); MIYASAKA, Fuyuki, Tsurugashima-shi, 350-2280 (JP); TSUGE, Kakeru, Tsurugashima-shi, 350-2280 (JP)
(74) Representative: Betten & Resch

(57) **Abstract**

An operation device according to the present invention includes a touch-sensitive operation surface installed in a vehicle and an operation guide formed corresponding to equipment mounted in the vehicle on the touch-sensitive operation surface. The operation device is configured to, when accepting a two-point touch operation for the touch-sensitive operation surface, accept another touch operation that is entered subsequently as an operation command for the equipment.

## Description

### INCORPORATION BY REFERENCE

This application is based upon and claims the benefit of priority from Japanese patent application No. 2022-194373, filed on December 5, 2022, the disclosure of which is incorporated herein in its entirety by reference.

### TECHNICAL FIELD

The present invention relates to a touch-sensitive operation device mounted in a vehicle.

### BACKGROUND ART

A touch-sensitive operation device is disclosed in Patent Literature 1 as an operation device that operates equipment mounted in a vehicle. The operation device shown in Patent Literature 1 is, for example, placed on an armrest provided on a seat door and configured to be able to operate to open and close the window of the vehicle. Specifically, the operation device shown in Patent Literature 1 has a linear-shape operation part formed on a touch-sensitive operation panel, and is configured to accept a touch operation such as moving a finger along the linear shape of the operation part, as a window opening/closing operation.

Patent Literature 1: Japanese Unexamined Patent Application Publication No. JP-A 2022-137366

However, since the above-described operation device accepts an operator's touch operation, contact with the operation panel by the operator not intended for operation may be accepted as an operation. For example, in a case where the operation device is placed on the armrest, there is a possibility that, when the operator places his/her arm on the armrest, his/her finger, palm, wrist or the like unintentionally touches the operation device. Therefore, there has been room for improvement in the detection of contact intended for operation.

### SUMMARY OF THE INVENTION

Accordingly, an object of the present invention is to perform control corresponding to the presence or absence of an operation intention in a touch-sensitive operation device.

An operation device as an aspect of the present invention includes a touch-sensitive operation surface installed in a vehicle and an operation guide formed corresponding to equipment mounted in the vehicle on the touch-sensitive operation surface. The operation device is configured to, when accepting a two-point touch operation for the touch-sensitive operation surface, accept another touch operation entered subsequently as an operation command for the equipment.

Further, an operation accepting method as an aspect of the present invention is an operation acceptance method by an operation device having a touch-sensitive operation surface installed in a vehicle. An operation guide corresponding to equipment mounted in the vehicle is formed on the touch-sensitive operation surface. The operation acceptance method includes, when accepting a two-point touch operation for the touch-sensitive operation surface, accepting another touch operation entered subsequently as an operation command for the equipment.

With the configurations as described above, the present invention enables appropriate control corresponding to the presence or absence of an operation intention in a touch-sensitive operation device that operates equipment mounted in a vehicle.

### BRIEF DESCRIPTION OF DRAWINGS

Fig. 1 is a view showing a configuration of an operation device in a first example embodiment of the present invention;
Fig. 2 is a block diagram schematically showing a configuration for moving a window including the operation device disclosed in Fig. 1;
Fig. 3 is a view showing an operation of the operation device disclosed in Fig. 1;
Fig. 4 is a view showing an operation of the operation device disclosed in Fig. 1;
Fig. 5 is a flowchart showing an operation method by the operation device disclosed in Fig. 1;
Fig. 6 is a flowchart showing an operation method by an operation device in a second example embodiment of the present invention;
Fig. 7 is a view showing an operation of an operation device in a third example embodiment of the present invention; and
Fig. 8 is a flowchart showing an operation method by the operation device in the third example embodiment of the present invention.

### EXAMPLE EMBODIMENT

### <First Example Embodiment>

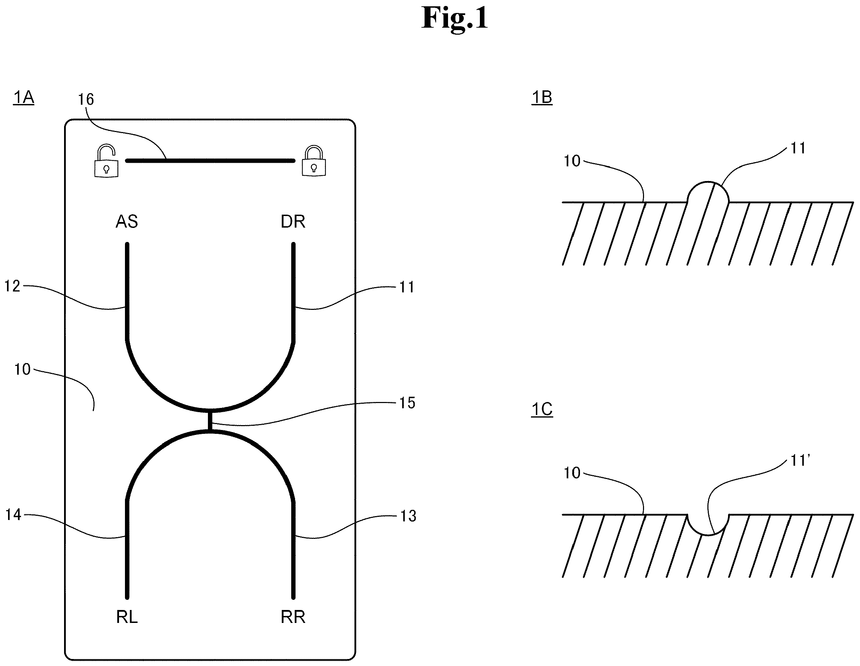

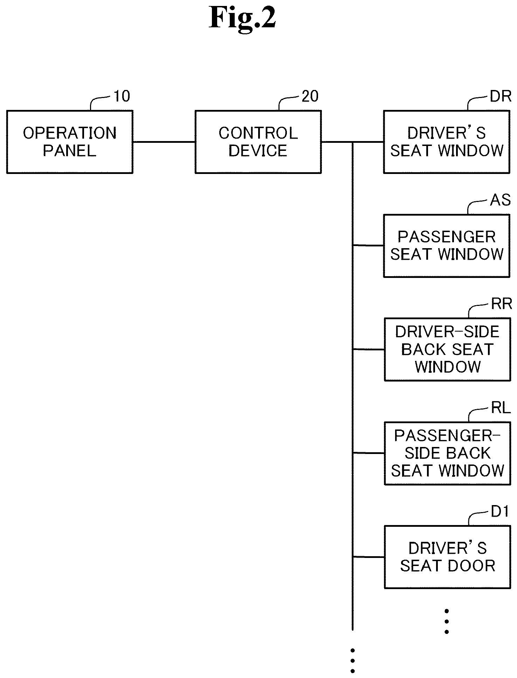

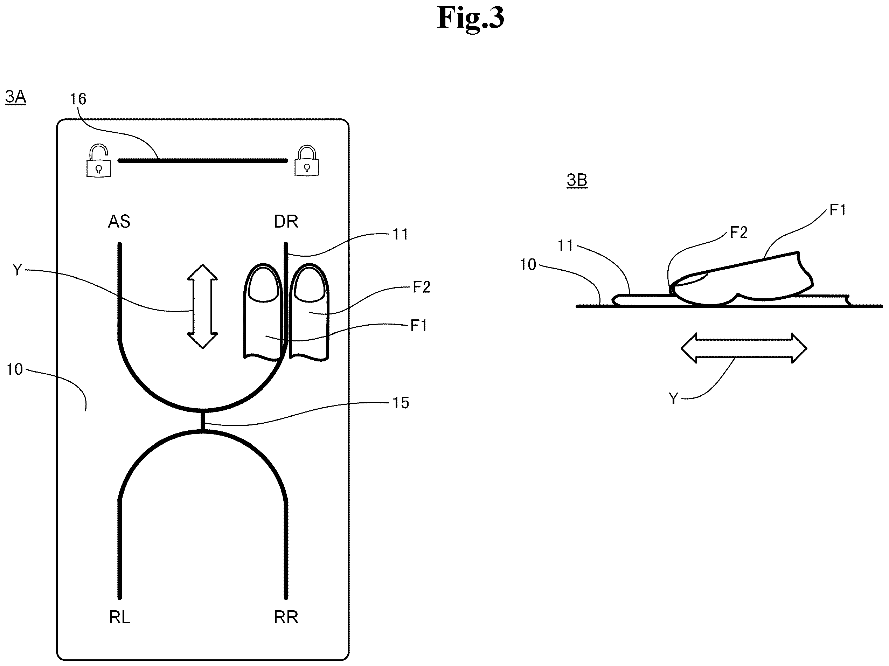

A first example embodiment of the present invention will be described with reference to Fig. 1 to 5. Figs 1 and 2 are views for describing a configuration of an operation device, and Figs. 3 to 5 are views for describing the movement of the operation device.

### [Configuration]

The operation device in the present invention is mainly for operating to open and close the window of an automobile that is a vehicle and is placed, for example, on an armrest provided on a seat door. In particular, the operation device in this example embodiment is placed on an armrest provided on a driver's seat door and allows an operator who is a driver to operate to open and close the windows of four seats (driver's seat, passenger seat, driver-side back seat, and passenger-side back seat). The operation device is also configured to be able to perform a window locking/unlocking operation and a door locking/unlocking operation, in addition to the window opening/closing operation. Meanwhile, the operation device of the present invention is not necessarily limited to being provided on the driver's seat door, and may be provided on another seat door or may be provided at any place in the vehicle, not limited to the door. Moreover, the operation device of the present invention may be configured to able to perform the opening/closing operation on one or another number of windows, not necessarily limited to the opening/closing operation on the four windows. Furthermore, the operation device of the present invention may be utilized to operate any equipment of the vehicle, not limited to operating the window. That is to say, the operation device of the present invention may accept an operation on the operation device as will be described later as an operation command for equipment other than the windows, and control the equipment in response to the operation command.

Reference character 1A denotes a view seen from above of part of the operation device in this example embodiment. In this view, the upper side is the front of the vehicle, the lower side is the rear of the vehicle, and the lateral direction is the width direction of the vehicle. Consequently, a driver's seat window is located on the right side of the operation device, a passenger seat window is located on the left side, a driver-side back seat window is located on the right rear side, and a passenger-side back seat window is located on the left rear side.

As indicated by reference character 1A of Fig. 1, the operation device includes an operation panel 10 having a substantially rectangular shape. The operation panel 10 has, for example, a capacitive touch-sensitive operation surface, and is configured to detect a position (touched spot) on the operation surface touched during a touch operation with the operator's finger. Meanwhile, the operation panel 10 is not limited to being configured to be a capacitive type, and may have a configuration that can detect a touch operation on the operation surface of an operation object with a finger or the like.

Specifically, the surface of the operation panel 10 is formed in a planar shape as a whole, and has convex operation parts (operation guides) 11 to 16 formed in part. For example, reference character 1B of Fig. 1 indicates a cross-sectional view of a portion where the operation part 11 is formed that is a portion of the operation panel 10, where the operation parts 11 to 16 are configured in a shape protruding from the surface of the operation panel 10 in a substantially semicircular arc shape. Then, as indicated by reference character 1A of Fig. 1, the operation parts 11 to 16 are formed in a linear shape having a convex portion with a predetermined length and, as shown below, formed separated in a plurality of operation parts. The operation parts 11 to 16 are not necessarily limited to being formed of a convex portion, and may be formed of a concave portion 11' as denoted by reference character 1C of Fig. 1. Moreover, the operation parts 11 to 16 are not necessarily limited to being formed in a linear shape, and may be formed of a convex portion or a concave portion having a predetermined width.

Specifically, first, the operation parts 11 to 16 are separated into window operation parts denoted by reference characters 11 to 15 formed in the middle of the operation panel 10 and a door lock operation part denoted by reference character 16 formed at the forward part of the operation panel 10. Among the window operation parts 11 to 15, a portion located on the front right side of the vehicle and extending forward forms a driver's seat window operation part 11, and a portion located on the front left side of the vehicle and extending forward forms a passenger seat window operation part 12. The driver's seat window operation part 11 and the passenger seat window operation part 12 are connected to each other by extending their respective rear ends, and are formed in a substantially U-letter shape that opens on the front side of the vehicle. Moreover, among the window operation parts 11 to15, a portion located on the rear right side of the vehicle and extending backward forms a driver-side back seat window operation part 13, and a portion located on the rear left side of the vehicle and extending backward forms a passenger-side back seat window operation part 14. The driver-side back seat window operation part 13 and the passenger-side back seat window operation part 14 are connected to each other by extending their respective front ends, and are formed in a substantially inverted U-letter shape that opens on the rear side of the vehicle. Moreover, the connected spot between the driver's seat window operation part 11 and the passenger seat window operation part 12 located on the front side of the vehicle, and the connected spot between the driver-side back seat window operation part 13 and the passenger-side back seat window operation part 14 located on the rear side of the vehicle are connected by a connection part 15 having a substantially straight line shape extending in the longitudinal direction of the vehicle. That is to say, the window operation parts 11 to 15 are formed with the connection part 15 as the center in a shape that branches and extends from the connection part 15 in directions corresponding to the positions of the respective seats. Moreover, the door lock operation part 16 is formed in a substantially straight line shape extending in the width direction of the vehicle.

As described above, the respective operation parts 11 to 16 are formed in different positions from each other on the surface of the operation panel 10, and different vehicle equipment from each other are associated with the respective operation parts 11 to 16. In particular, the operation parts denoted by reference characters 11 to 14 are associated with the respective windows, and the relation of relative formation positions on the surface of the operation panel of the respective operation parts 11 to 14 correspond to the relative positional relation of the respective windows associated therewith. For example, a driver's seat window DR located on the front right side of the vehicle is associated with the driver's seat window operation part 11 located on the front right side of the operation panel 10, and a passenger seat window AS located on the front left side of the vehicle is associated with the passenger seat window operation part 12 located on the front left side of the operation panel 10. Moreover, a driver-side back seat window RR located on the rear right side of the vehicle is associated with the driver-side back seat window operation part 13 located on the rear right side of the operation panel 10, and a passenger-side back seat window RL is associated with the passenger-side back seat window located on the rear left side of the operation panel 10. All the doors including a driver's seat door D1 are associated with the door lock operation part 16.

Although a case of applying to a right-hand drive vehicle in which the driver's seat is located on the right side of the vehicle is illustrated in this example embodiment, the names of the respective operation parts 11 to 14 and windows corresponding thereto vary in the case of applying to a left-hand drive vehicle in which the driver's seat is located on the left side of the vehicle. That is to say, in the case of applying to a left-hand drive vehicle, the operation part 11 located on the front right side of the operation panel 10 is equivalent to the passenger seat window operation part and is associated with the passenger seat window located on the front right side of the vehicle, and the operation part 12 located on the front left side of the operation panel 10 is equivalent to the driver's seat window operation part and is associated with the driver's seat window located on the front left side of the vehicle. Moreover, the operation part 13 located on the rear right side of the operation panel 10 is equivalent to the passenger-side back seat window operating part and is associated with the passenger-side back seat window located on the rear right side of the vehicle, and the operation part 14 located on the rear left side of the operation panel 10 is equivalent to the driver-side back seat window operation part and is associated with the driver-side back seat window located on the rear left side of the vehicle.

Then, the operation panel 10 accepts a touch operation entered by the operator as an operation command that varies with the touched position and the content of the touch operation. That is to say, the operation panel 10 detects from the touched position whether the touch operation is an operation on any of the operation parts 11 to 16 or an operation on a spot different from the operation parts 11 to 16, and accepts an operation command corresponding to an operation target operation part among the operation part 11 to 16 and the content of the operation. The operation panel 10 is equipped with a detecting unit, which is not shown, and the detecting unit accepts an operation command corresponding to the position and the content of the touch operation on the operation panel 10. Then, the operation panel 10 notifies the accepted operation command to a control device 20 mounted in the vehicle, and the control device 20 controls the movement of the window and the doors in response to the accepted operation command. A block diagram of Fig. 2 schematically shows a configuration provided in the vehicle for controlling the movement of the windows and the doors by a touch operation entered into the operation panel 10. The control device 20 may function as the operation device in cooperation with the operation panel 10 and function so as to detect the position and content of the touch operation entered into the operation panel 10 and accept an operation command corresponding to the touch operation.

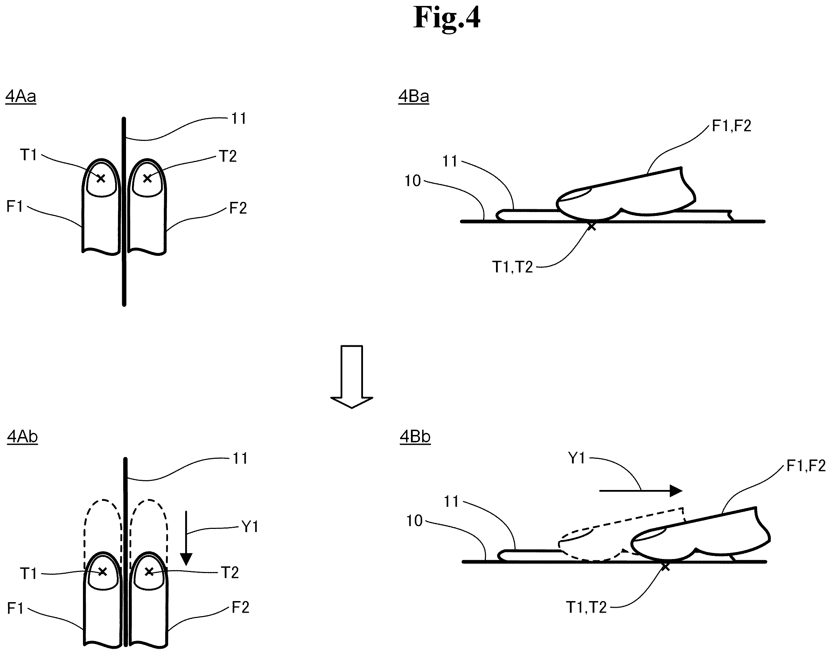

Specifically, referring to Figs. 3 and 4, an example of a touch operation entered into the operation panel 10 and an operation command accepted at the time will be described. First, Fig. 3 shows a state when the driver's seat window operation part 11 formed on the front right side on the surface of the operation panel 10 is operated. In Fig. 3, reference character 3A denotes a view of the operation panel 10 seen from above, and reference character 3B denotes a view seen from side. In the following description, the driver's seat window operation part 11 will be simply referred to as the operation part 11.

As shown in Fig. 3, in this example embodiment, the operation panel 10 first accepts entry of a touch operation at two points on the operation panel 10 for the operation part 11 by two fingers F1 and F2. At this time, when the position of the touch operation by the two fingers F1 and F2 satisfies a preset criterion as will be described later, the operation panel 10 accepts as an initial operation for the operation part 11. Then, only when accepting the initial operation, the operation panel 10 accepts a slide operation by the two fingers F1 and F2 along the longitudinal direction of the operation part 11 as indicated by arrow Y in Fig. 3, which will be entered thereafter. Consequently, in accordance with the direction and speed of the slide operation by the fingers F1 and F2, the operation panel 10 accepts as a manual or automatic opening/closing operation for the window associated with the operation part 11. For example, the operation panel 10 accepts a slide operation to move from above to below by the two fingers F1 and F2 for the operation part 11 associated with the driver's seat window DR shown in Fig. 3, as an operation command to close the driver's seat window DR. Alternatively, the operation panel 10 accepts a slide operation to move from below to above by the two fingers F1 and F2 for the operation part 11 associated with the driver's seat window DR shown in Fig. 3, as an operation command to open the driver's seat window DR.

Subsequently, referring to Fig. 4, the acceptance of a touch operation by the operation panel 10 will be described more specifically. Fig. 4 illustrates only the driver's seat window operation part 11, the upper views of Fig. 4 show an initial operation to be described later, and the lower views of Fig. 4 show an operation after the initial operation.

As indicated by reference characters 4Aa and 4Ba as the upper views of Fig. 4, the operation panel 10 first accepts entry of a touch operation at two points on the operation panel 10 across the operation part 11 by the two fingers F1 and F2. Reference character 4Aa as the upper view of Fig. 4 denotes a view obtained by seeing the operation panel 10 from above, and reference character 4Ba denotes a view obtained by seeing the operation panel 10 from side. At this time, the operation panel 10 checks a positional relation between a touched spot T1 by the one finger F 1, a touched spot T2 by the other finger F2, and the operation part 11 located closest to the touched spots T1 and T2 and, when the positional relation therebetween satisfies a preset criterion, the operation panel 10 accepts the two-point touch operation as an initial operation for the operation part 11. For example, the operation panel 10 checks distances from the operation part 11 to the respective touched spots T1 and T2 and, when the respective touched spots T1 and T2 are located within a range of a preset distance from the operation part 11, the operation panel 10 accepts as an initial operation for the operation part 11. That is to say, in the case of the upper views of Fig. 4, the two touched spots T1 and T2 across the operation part 11 are located within a predetermined distance range from the operation part 11, respectively, so that the operation panel 10 accepts as an initial operation for the operation part 11.

The criterion by which the operation panel 10 accepts an initial operation for the operation part 11 is not necessarily limited to the case where the two touched spots T1 and T2 are located across the operation part 11 as described above. For example, even when the touched spot T1 by the one finger F1 is located on the operation part 11 and the touched spot T2 by the other finger F2 is within the predetermined distance from the operation part 11, the two touched spots T1 and T2 are located within the predetermined distance from the operation part 11, so that the operation panel 10 may accept as an initial operation for the operation part 11. Moreover, even when the touched spot T1 by the one finger F1 and the touched spot T2 by the other finger F2 are not located across the operation part 11 and are located on the same side along the operation part 11 and within the predetermined distance from the operation part 11, the two touched spots T1 and T2 are located within the predetermined distance from the operation part 11, so that the operation panel 10 may accept as an initial operation for the operation part 11. On the other hand, in the case of a touch operation at one point or at three or more points, or in the case of a touch operation at two points that are not located within the predetermined distance from the operation part 11 as described above, the operation panel 10 does not accept as an initial operation for the operation part 11. In such cases, even if a subsequent slide operation or the like as will be described later is performed, the operation is disabled, and the operation panel 10 does not accept as a window operation command.

Therefore, by accepting an operation such that the two touched spots T1 and T2 are within the predetermined distance range from the operation part 11, respectively, as the initial operation, it is possible to, for example, distinguish an operator's unintended contact such that the fingertip of the hand put on the armrest or the like touches the operation panel 10 from an operator's intended contact.

Then, after the acceptance of the initial operation for the operation part 11 described above, the operation panel 10 accepts a slide operation along the longitudinal direction of the operation part 11 performed in a state where the contact at the two touched spots T1 and T2 on the operation panel 10 in the initial operation is kept as indicated by arrow Y1 in the lower views of Fig. 4, as a manual or automatic opening/closing operation for the window associated with the operation part 11. Reference character 4Ab as the lower view of Fig. 4 denotes a view obtained by seeing the operation panel 10 from above, and reference character 4Bb denotes a view obtained by seeing the operation panel 10 from side. At this time, the operation panel 10 accepts a slide operation within a preset time after the initial operation, for example, a slide operation within three seconds from the initial operation, as a window opening/closing operation. That is to say, when the operation panel 10 does not detect a slide operation within a preset time after the initial operation, the operation panel 10 once cancels the initial operation for the operation part 11, and waits for an initial operation for any of the operation parts again.

Therefore, by accepting a slide operation within a prese time from an initial operation for the operation part 11 as an operation with operator's intention to operate, it is possible to, for example, distinguish a contact without operator's intention to operate such that the operator does not move his/her finger while putting on the armrest from an operation with operator's intention to operate. Besides, by accepting a touch operation such as a slide operation entered in a state where the contact at the two touched spots T1 and T2 is kept, as another touch operation entered after the touch at the two touched spots T1 and T2, the need for interposing a process to once cancel the contact state between the two--point touch operation and the other touch operation is eliminated. Consequently, the need for visually checking the operation position again by the operator is eliminated, and it is possible to smoothly perform a highly blind window opening/closing operation.

Furthermore, the operation panel 10 accepts as different operation commands for the window associated with the operation part 11 in accordance with the operation contents of the slide operations described above. For example, the operation panel 10 may separately detect the operation contents including different speeds, operation times, operation amounts and the like of the slide operations by the fingers F1 and F2, and accept the respective operations as different operation commands. As one example, in a case where a so-called swipe operation, which is slowly moving the fingers F1 and F2 at a speed in a preset low-speed range (first range speed), is performed for the operation part 11, the operation panel 10 accepts as a manual opening/closing operation command to open/close the associated driver's seat window DR only while the fingers F1 and F2 are touching the operation part 11. At this time, the operation panel 10 may accept as an operation command to open/close the driver's seat window DR at a speed that varies with the magnitude of the movement amount of the fingers F1 and F2, that is, the swipe operation amount. For example, in a case where the swipe operation amount is equal to or less than a threshold value, the operation panel 10 accepts as an operation command to manually open/close the driver's seat window DR at a preset reference speed and, in a case where the swipe operation amount is more than the threshold value, the operation panel 10 accepts as an operation command to manually open/close the driver's seat window DR at a preset speed faster than the reference speed. On the other hand, in a case where a so-called flick operation, which is quickly moving the fingers F1 and F2 at a speed in a preset high-speed range, that is, at a faster speed than the speed in the low-speed range described above, is performed for the operation part 11, the operation panel 10 accepts as an automatic opening/closing operation command to automatically open/close the driver's seat window DR until fully closes or opens.

Therefore, by allowing acceptance of entry of both a first touch operation corresponding to a manual operation such as a swipe operation and a second touch operation corresponding to an automatic operation such as a flick operation after the two-point touch operation, it becomes possible to select a manual operation command or an automatic operation command in accordance with an operator's intention to operate.

Although the case of accepting a swipe operation as a manual opening/closing operation command and accepting a flick operation as an automatic opening/closing operation command has been illustrated above, other touch operations may be accepted as manual and automatic opening/closing operation commands, respectively. For example, another touch operation set for manual operation may be accepted as a manual opening/closing operation command, and still another touch operation set for automatic operation that is different from the other touch operation set for manual operation may be accepted as an automatic opening/closing operation command.

In the example shown in the lower views of Fig. 4, on the operation panel 10, the two touched spots T1 and T2 by the fingers F1 and F2 during the slide operation are located across the operation part 11, but a criterion for the acceptance of the slide operation is not necessarily limited to the two touched spots T1 and T2 being located across the operation part 11. For example, as with the criterion for the acceptance of the initial operation described above, the criterion for the acceptance of the slide operation by the operation panel 10 may be a case where the touched spot T1 by the one finger F1 is located on the operation part 11 and the touched spot T2 by the other finger F2 is within a predetermined distance from the operation part 11, or may be a case where the touched spot T1 by the one finger F1 and the touched spot T2 by the other finger F2 are not located across the operation part 11 and are located on the same side along the operation part 11 and within a predetermined distance from the operation part 11. Therefore, even when the operation panel 10 accepts the initial operation, in a case where a subsequent slide operation is an operation at one touched spot or at three or more touched spots, or in a case where a subsequent slide operation is a two-point operation that does not satisfy the distance criterion as described above, the operation panel 10 does not accept as a slide operation for the operation part 11. In such a case, the operation panel 10 disables the slide operation, and does not accept as a window operation command.

Further, although a touch operation for the driver's seat window operation part 11 has been described above as an example, the same touch operation is performed for the other operation parts 12 to 14. In this case, any of the operation parts 12 to 14 that is located closest to the two touched spots T1 and T2, such as sandwiched between the fingers F1 and F2, becomes an operation target, and an initial operation and a subsequent slide operation for the operation part are accepted. As denoted by reference character 1A in Fig. 1, when the operator performs a touch operation to move his/her finger along the shape of the door lock operation part 16 having a linear shape formed on the front side on the surface of the operation panel 10, the operation panel 10 detects as an operation for the door lock operation part 16 and accepts as an operation command to lock/unlock all the doors associated with the door lock operation part 16.

### [Movement]

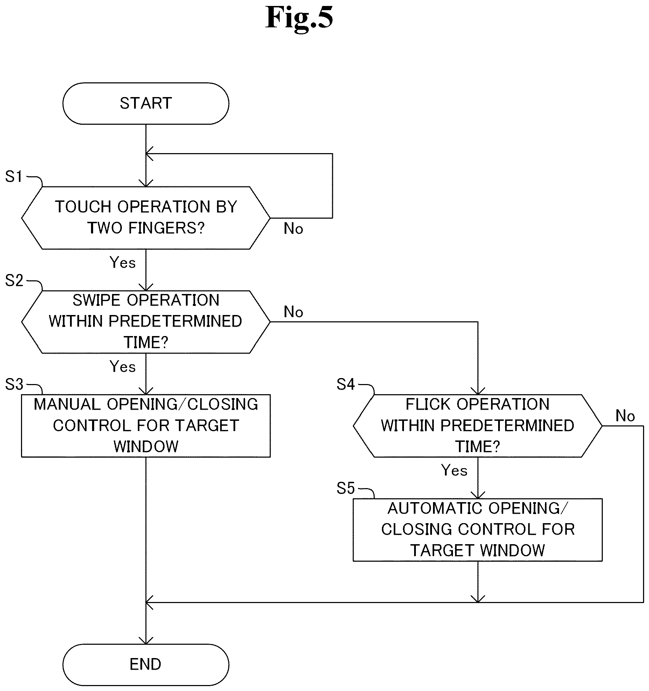

Next, the movement of the operation device when the above-described operation panel 10 is operated will be described mainly with reference to a flowchart of Fig. 5. Here, as an example of the operation parts 11 to 14, a case where the driver's seat window operation part 11 is operated will be described as shown in Figs. 3 and 4.

The operation device detects a two-point touch operation as an operator's touch operation for the operation panel 10 (step S1). At this time, particularly when detecting a two-point touch operation such that the touched spots T1 and T2 are within a predetermined distance from the operation part 11 across the operation part 11 as shown in the upper views of Fig. 4, the operation device accepts the two-point touch operation as an initial operation for the operation part 11 (Yes at step S1). Meanwhile, even if the two touched spots T1 and T2 are not across the operation part 11, when the touched spots T1 and T2 are within the predetermined distance from the operation part 11 as described before, the operation device may accept the two-point touch operation as the initial operation. Therefore, when detecting a two-point touch operation that does not satisfy the criterion as mentioned above or a one-point or three-or-more-point touch operation on the operation panel 10, the operation device does not accept as the initial operation for the operation part 11. In a case where the operation device does not detect the two-point touch operation described above, the operation device repeatedly executes this step until detecting the two-point touch operation (No at step S1).

Subsequently, the operation device detects a swipe operation or a flick operation that is entered into the operation panel 10 within a predetermined time after accepting the initial operation described above (steps S2 and S4). In a case where a preset time elapses without entry of a swipe operation or a flick operation to the operation panel 10 after the acceptance of the initial operation (No at step S2, No at step S4), the operation device disables the abovementioned accepted initial operation.

Specifically, during a predetermined time after the acceptance of the initial operation, the operation device detects a slide operation along the longitudinal direction of the operation part 11 in a state where the contact at the two touched spots T1 and T2 with the operation panel 10 in the initial operation is kept as indicated by arrow Y1 in the lower views of Fig. 4. For example, in a case where the operation device detects a swipe operation for the operation panel 10 within a predetermined time after the initial operation (Yes at step S2), the operation device accepts the operation as a manual opening/closing operation for the driver's seat window associated with the operation part 11. Then, the operation device causes the control device 20 to drive and control so as to manually open/close the driver's seat window DR only while the operation panel 10 is being touched (step S3). On the other hand, for example, in a case where the operation device detects a flick operation for the operation panel 10 within a predetermined time after the initial operation (No at step S2, Yes at step S4), the operation device accepts the operation as an automatic opening/closing operation for the driver's seat window associated with the operation part 11. Then, the operation device causes the control device 20 to drive and control the driver's seat window DR until fully closed or opened (step S5). Here, the operation device accepts the opening/closing direction of a target window in accordance with the slide direction along the operation part 11 on the operation panel 10.

As described above, in the operation device in this example embodiment, first, only when a two-point touch operation satisfying a preset criterion is entered as described above, a subsequent slide operation is accepted as a window opening/closing operation. Therefore, even if the operator unintentionally touches the operation device, it is possible to prevent the operation device from accepting such an operation, and it is possible to prevent an incorrect operation. Moreover, in a case where the operation device accepts an initial operation by the two-point touch operation as described above, a slide operation keeping the two-point touch operation in a predetermined time after the acceptance is accepted as a window opening/closing operation. Therefore, for example, even if an unintended operation is performed after the operator performs the initial operation, it is possible to prevent the operation from being accepted by the operation device, and it is possible to prevent an incorrect operation.

### <Second Example Embodiment>

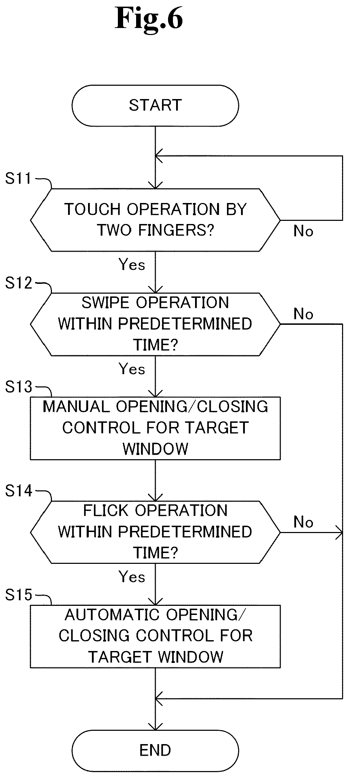

Next, a second example embodiment of the present invention will be described with reference to Fig. 6. Fig. 6 is a view for describing the movement of an operation device.

The operation device in this example embodiment has almost the same configuration as the operation device in the first example embodiment described above, but differs in the method for accepting an operation command as will be described below. A different point of the operation device in this example embodiment from the first example embodiment will be mainly described below.

First, as in the first example embodiment, the operation panel 10 of the operation device in this example embodiment accepts an initial operation by a two-point touch operation (Yes at step S11), but the method for accepting a subsequent slide operation is different from that in the first example embodiment. Specifically, the operation panel 10 accepts only a swipe operation set for manual operation among slide operations during a predetermined time after the acceptance of the initial operation for the operation part 11 (Yes at step S12). Therefore, even when detecting a flick operation set for automatic operation during the predetermined time after the acceptance of the initial operation, the operation panel 10 does not accept the flick operation (No at step S12). In a case where the two-point touch operation is not detected, this step is repeatedly executed until the two-point touch operation is detected (No at step S11).

Then, when accepting a swipe operation within a predetermined time after the initial operation as described above, the operation device accepts the operation as a manual opening/closing operation for the driver's seat window associated with the operation part 11. In this case, the operation device causes the control device 20 to drive and control so as to manually open/close the driver's seat window only while the operation panel 10 is being touched (step S13).

Further, in a case where a flick operation set for automatic operation is performed within a predetermined time after the acceptance of the swipe operation set for manual operation described above, the operation panel 10 accepts the flick operation (Yes at step S14). That is to say, the operation panel 10 does not accept a flick operation for automatic operation after the initial operation as described above, but accepts a flick operation for automatic operation after the acceptance of a swipe operation for manual operation. Then, the operation device accepts the flick operation as an automatic opening/closing operation for the driver's seat window associated with the operation part 11. In this case, the operation device causes the control device 20 to drive and control the driver's seat window until fully closed or opened automatically (step S15). Here, the operation device accepts the opening/closing direction of the target window in accordance with the slide direction along the operation part 11 on the operation panel 10. In a case where a preset time elapses without entry of a flick operation for the operation panel 10 after the operation device accepts the initial operation and the swipe operation (No at step S14), the operation device disables the accepted initial operation and swipe operation described above.

As described above, the operation device in this example embodiment accepts only a swipe operation set for manual operation after the initial operation, and the window can only be opened and closed manually. In general, in order to perform a flick operation, there is a need to first start an operation with a swipe operation. The operation device in this example embodiment differs from the operation device in the first example embodiment described above in that it does not provide a predetermined waiting time for accepting a second touch operation (flick operation) after the two-point touch operation. Since such a waiting time is not set, it is possible to, when the touched spot begins to shift after the two-point touch operation, regard the shift of the touched spot as a swipe operation, and immediately start a manual opening/closing operation. That is to say, since it is possible to drive the window immediately after the initial operation, the response of the operation can be improved as a result. Moreover, consequently, the operation device in this example embodiment can shift to the automatic opening/closing operation only via the manual opening/closing, so that the operability of the operation device can be brought closer to that of an existing window operation device equipped with a physical switch operation member, for example, a swingable operation member.

Although the case of accepting a swipe operation as a manual opening/closing operation command and accepting a flick operation as an automatic opening/closing operation command has been illustrated above, other touch operations may be accepted as a manual and automatic opening/closing operation commands, respectively. For example, in the above example, only another touch operation set for manual operation may be accepted as a manual opening/closing operation command after the initial operation, and thereafter, still another touch operation set for automatic operation that is different from the touch operation set for manual operation may be accepted as an automatic opening/closing operation command.

### <Third Example Embodiment>

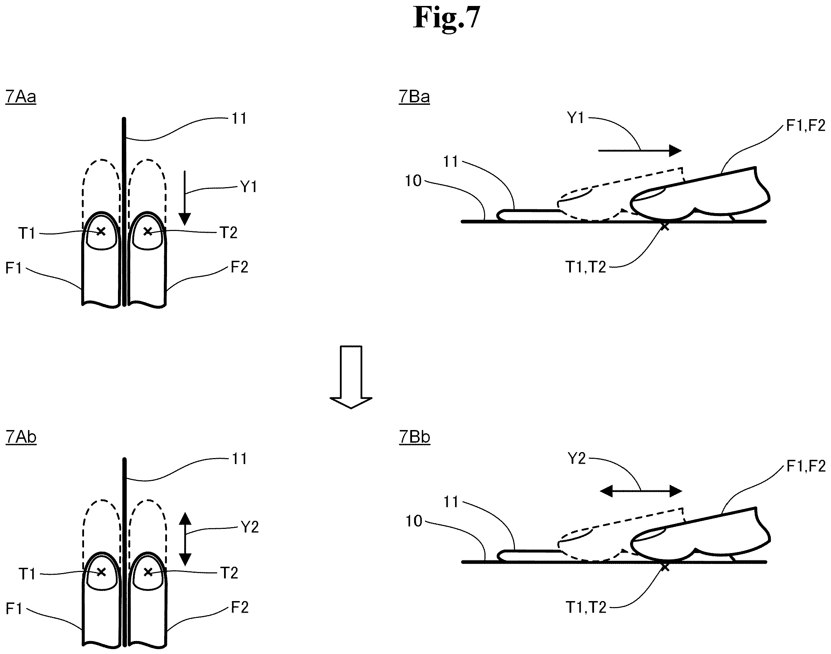

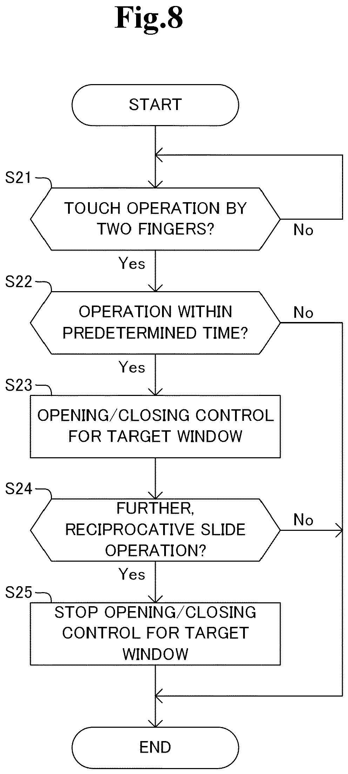

Next, a third example embodiment of the present invention will be described with reference to Figs. 7 and 8. Figs. 7 and 8 are views for describing the movement of an operation device.

The operation device in this example embodiment has almost the same configuration as the operation device in the first example embodiment described before, but differs in a point to be described below. The different point of the operation device in this example embodiment from the first example embodiment will be mainly described below.

First, the operation panel 10 of the operation device in this example embodiment accepts an initial operation by a two-point touch operation in the same manner in the first example embodiment (Yes at step S21), and accepts a swipe operation that is a slide operation as indicated by arrow Y1 in the upper views of Fig. 7 in a predetermined time after the acceptance (Yes at step S22). Reference character 7Aa in the upper view of Fig. 7 denotes a view obtained by seeing the operation panel 10 from above, and reference character 7Ba denotes a view obtained by seeing the operation panel 10 from side. When not detecting the two-point touch operation, the operation device repeatedly executes the first step until detecting the two-point touch operation (No at step S21). Moreover, when a present time elapses without entry of the swipe operation to the operation panel 10 after the acceptance of the initial operation (No at step S22), the accepted initial operation described above is disabled. As in the first example embodiment, when detecting the swipe operation after the initial operation (Yes at step S22), the operation device drives and controls so as to manually open/close the window (step S23).

Then, the operation device in this example embodiment is further configured to accept a stop operation command to stop the opening/closing movement of the window as described above. For example, the operation panel 10 accepts a reciprocative slide operation to reciprocatively slide the fingers F1 and F2 after the slide operation as described above as indicated by arrow Y2 in the lower views of Fig. 7, and accepts it as the stop operation command (Yes at step S24). Moreover, in a case where no more reciprocative slide operation is entered after the above-described slide operation (No at step S24), the operation device continues to control the opening/closing of the window under execution.

Specifically, after accepting a swipe operation for the operation part 11 as indicated by arrow Y1 in the upper views of Fig. 7, the operation panel 10 accepts, as a stop operation command, a reciprocative slide operation to, while keeping the contact state at the two touched spots T1 and T2 with the operation panel 10 after the slide operation, reciprocatively slide by inverting the slide direction along the longitudinal direction of the operation unit 11 from the position. At this time, the operation panel 10 accepts a reciprocative slide operation including one or more reciprocations after the slide operation, as a stop operation command. For example, in the example of the left views of Fig. 7, a reciprocative slide operation including one reciprocation as indicated by arrow Y2 is performed by, after sliding the fingers F1 and F2 downward as indicated by arrow Y1, first sliding the fingers F1 and F2 upward from the position and then sliding downward by inverting the direction. The operation panel 10 may detect, as a stop operation command, a reciprocative slide operation including the slide operation after the initial operation and alternately inverting the slide direction for more than one reciprocation, for example, a reciprocative slide operation including one and a half reciprocations or two or more reciprocations.

Then, when accepting the stop operation command by the reciprocative slide operation as described above, the operation device causes the control device 20 to control so as to stop the opening/closing movement of the window manually or automatically controlled (step S25). The operation device may cause the control device 20 to control so as to stop the opening/closing movement of the window when accepting the stop operation command by the reciprocative slide operation described above even if the window is manually or automatically controlled to open/close in the second example embodiment described above.

In general, an operator such as a driver may rub his/her finger against the surface of the cabin interior part at hand, including some operation switch, when the operator has nothing to do. For example, in the case of an operation device for driving a window, the window driving operation device is often positioned at the fingertip of the hand placed on the armrest, so that the operator rubs his/her finger against an operation entry portion. At this time, in a case where the operation device is an operation device that accepts a touch entry, the window may be driven without operator's intention to open/close the window due to the rubbing of the finger. The operation device in this example embodiment is controlled to stop driving the window when a reciprocative slide operation is performed after the initial operation and the slide operation. Consequently, it is possible to prevent the driving of the window based on an unintended contact operation due to a finger rubbing action or the like.

As described above, the operation device in this example embodiment can stop the opening/closing movement of the window by the reciprocative slide operation even after the manual or automatic window opening/closing operation. Therefore, even if the operator unintentionally performs a window opening/closing operation, it is possible to stop the movement and it is possible to prevent an incorrect operation.

In the first to third example embodiment described above, "two touched spots T1 and T2 are located across the operation part 11" refers to a state where the touched spots T1 and T2 are located on both sides along the operation part 11, and the contact of the fingers F1 and F2 with the operation part 11 is not essential. That is to say, it is not necessary to clamp or pinch the operation part 11 by the fingers F1 and F2.

### <Supplementary Notes>

The whole or part of the example embodiments disclosed above can be described as the following supplementary notes. Below, the overview of the operation device according to the present invention will be described. However, the present invention is not limited to the following configurations.

### (Supplementary Note A1)

An operation device comprising a touch-sensitive operation surface installed in a vehicle and an operation guide formed corresponding to equipment mounted in the vehicle on the touch-sensitive operation surface, wherein
the operation device is configured to, when accepting a two-point touch operation for the touch-sensitive operation surface, accept an other touch operation entered subsequently as an operation command for the equipment.

### (Supplementary Note A2)

The operation device according to Supplementary Note A1, wherein
the operation device is configured to, when accepting a two-point touch operation for the touch-sensitive operation surface within a predetermined distance from the operation guide, accept an other touch operation entered subsequently as an operation command for the equipment.

### (Supplementary Note A3)

The operation device according to Supplementary Note A1 or A2, wherein
the operation device is configured to, when accepting the two-point touch operation, accept the other touch operation entered within a subsequent time set in advance as the operation command for the equipment.

### (Supplementary Note A4)

The operation device according to Supplementary Note A1 or A2, wherein
the operation device is configured to, when accepting the two-point touch operation, accept a touch operation entered subsequently while a two-point contact state is maintained as the other touch operation set in advance.

### (Supplementary Note A5)

The operation device according to Supplementary Note A4, wherein:
the operation device is configured to, when accepting the two-point touch operation, subsequently, accept a touch operation entered while the two-point contact state is maintained as a first touch operation set in advance, and accept a touch operation that is entered while the two-contact state is maintained and that is different from the first touch operation as a second touch operation;
the first touch operation is a manual operation command for the equipment set in advance; and
the second touch operation is an automatic operation command for the equipment set in advance.

### (Supplementary Note A6)

The operation device according to Supplementary Note A5, wherein
the operation device is configured to accept a touch operation of sliding at a first range speed as the first touch operation, and accept a touch operation of sliding at a speed faster than the first range speed as the second touch operation.

### (Supplementary Note A7)

The operation device according to Supplementary Note A1 or A2, wherein:
the operation guide is formed in a linear shape having a predetermined length; and
the operation device is configured to, when accepting the two-point touch operation, accept a touch operation entered subsequently along the linear shape of the operation guide as the other touch operation set in advance.

### (Supplementary Note A8)

An operation acceptance method by an operation device having a touch-sensitive operation surface installed in a vehicle, an operation guide corresponding to equipment mounted in the vehicle being formed on the touch-sensitive operation surface, the operation acceptance method comprising,
when accepting a two-point touch operation for the touch-sensitive operation surface, accepting an other touch operation entered subsequently as an operation command for the equipment.

### (Supplementary Note B 1)

An operation device comprising a touch-sensitive operation surface installed in a vehicle and an operation guide formed corresponding to equipment mounted in the vehicle on the touch-sensitive operation surface, wherein
the operation device is configured to, when accepting a two-point touch operation for the touch-sensitive operation surface, accept only a touch operation for manual operation entered subsequently as a manual operation command for the equipment set in advance.

### (Supplementary Note B2)

The operation device according to Supplementary Note B 1, wherein
the operation device is configured to, when accepting a two-point touch operation for the touch-sensitive operation surface within a predetermined distance from the operation guide, accept only a touch operation for manual operation entered subsequently as a manual operation command for the equipment set in advance.

### (Supplementary Note B3)

The operation device according to Supplementary Note B 1 or B2, wherein
the operation device is configured to, when accepting the two-point touch operation, accept only the touch operation for manual operation entered within a subsequent time set in advance as the manual operation command for the equipment.

### (Supplementary Note B4)

The operation device according to Supplementary Note B 1 or B2, wherein
the operation device is configured to, when accepting the two-point touch operation for the touch-sensitive operation surface, accept a touch operation entered subsequently while a two-point contact state is maintained as the touch operation for manual operation.

### (Supplementary Note B5)

The operation device according to Supplementary Note B 1 or B2, wherein:
the operation guide is formed in a linear shape having a predetermined length; and
the operation device is configured to, when accepting the two-point touch operation, accept a touch operation entered subsequently along the linear shape of the operation guide as the touch operation for manual operation set in advance.

### (Supplementary Note B6)

The operation device according to Supplementary Note B 1 or B2, wherein:
the operation device is configured to, only when accepting the touch operation for manual operation, accept a touch operation for automatic operation that is entered subsequently and is different from the touch operation for manual operation; and
the touch operation for automatic operation is an automatic operation command for the equipment set in advance.

### (Supplementary Note B7)

The operation device according to Supplementary Note B6, wherein
the operation device is configured to accept a touch operation of sliding at a first range speed as the touch operation for manual operation, and accept a touch operation of sliding at a speed faster than the first range speed as the touch operation for automatic operation.

### (Supplementary Note B8)

An operation acceptance method by an operation device having a touch-sensitive operation surface installed in a vehicle, an operation guide corresponding to equipment mounted in the vehicle being formed on the touch-sensitive operation surface, the operation acceptance method comprising,
when accepting a two-point touch operation for the touch-sensitive operation surface, accepting only a touch operation for manual operation entered subsequently as a manual operation command for the equipment set in advance.

### (Supplementary Note C1)

An operation device comprising a touch-sensitive operation surface installed in a vehicle and an operation guide formed corresponding to equipment mounted in the vehicle on the touch-sensitive operation surface, wherein
the operation device is configured to accept a two-point touch operation of sliding entered to the touch-sensitive surface as an operation command for the equipment, and also accept an other touch operation of reciprocatively sliding while inverting a slide direction entered to the touch-sensitive operation surface as a stop operation command for movement of the equipment.

### (Supplementary Note C2)

The operation device according to Supplementary Note C1, wherein
the operation device is configured to accept an operation of touching two points on the touch-sensitive operation surface within a predetermined distance from the operation guide and sliding as an operation command for the equipment, and also accept the other touch operation of reciprocatively sliding while inverting a slide direction entered to the touch-sensitive operation surface as a stop operation command for movement of the equipment.

### (Supplementary Note C3)

The operation device according to Supplementary Note C 1 or C2, wherein
the operation device is configured to accept the other touch operation of reciprocatively sliding while alternately inverting a slide direction more than one reciprocation on the touch-sensitive operation surface as the stop operation command.

### (Supplementary Note C4)

The operation device according to Supplementary Note C 1 or C2, wherein
the operation device is configured to, when accepting the two-point touch operation, accept the other touch operation of the reciprocatively sliding entered subsequently as the stop operation command.

### (Supplementary Note C5)

The operation device according to Supplementary Note C3, wherein
the operation device is configured to, when accepting the two-point touch operation, accept the other touch operation of the reciprocatively sliding entered subsequently while a two-point contact state is maintained as the stop operation command.

### (Supplementary Note C6)

The operation device according to Supplementary Note C 1 or C2, wherein:
the operation guide is formed in a linear shape having a predetermined length; and
the operation device is configured to, when accepting the two-point touch operation, accept the other touch operation of the reciprocatively sliding entered along the linear shape of the operation guide as the stop operation command.

### (Supplementary Note C7)

An operation acceptance method by an operation device having a touch-sensitive operation surface installed in a vehicle, an operation guide corresponding to equipment mounted in the vehicle being formed on the touch-sensitive operation surface, the operation acceptance method comprising,
accepting a two-point touch operation of sliding entered to the touch-sensitive surface as an operation command for the equipment, and also accepting an other touch operation of reciprocatively sliding while inverting a slide direction entered to the touch-sensitive operation surface as a stop operation command for movement of the equipment.

Although the present invention has been described above with reference to the example embodiments and the like, the present invention is not limited to the above example embodiments. The configurations and details of the present invention can be changed in various manners that can be understood by one skilled in the art within the scope of the present invention.

### DESCRIPTION OF REFERENCE CHARACTERS

- 10: operation panel
- 11: driver's seat window operation part
- 12: passenger seat window operation part
- 13: driver-side back seat window operation part
- 14: passenger-side back seat window operation part
- 15: connection part
- 16: door lock operation part
- 20: control device
- F1, F2: finger
- T1, T2: touched spot
- DR: driver's seat window
- AS: passenger seat window
- RR: driver-side back seat window
- RL: passenger-side back seat window
- D1: driver's seat door

## Claims

1. An operation device comprising a touch-sensitive operation surface installed in a vehicle and an operation guide formed corresponding to equipment mounted in the vehicle on the touch-sensitive operation surface, wherein
the operation device is configured to, when accepting a two-point touch operation for the touch-sensitive operation surface, accept an other touch operation entered subsequently as an operation command for the equipment.

2. The operation device according to Claim 1, wherein
the operation device is configured to, when accepting a two-point touch operation for the touch-sensitive operation surface within a predetermined distance from the operation guide, accept an other touch operation entered subsequently as an operation command for the equipment.

3. The operation device according to Claim 1, wherein
the operation device is configured to, when accepting the two-point touch operation, accept the other touch operation entered within a subsequent time set in advance as the operation command for the equipment.

4. The operation device according to Claim 1, wherein
the operation device is configured to, when accepting the two-point touch operation, accept a touch operation entered subsequently while a two-point contact state is maintained as the other touch operation set in advance.

5. The operation device according to Claim 4, wherein:
the operation device is configured to, when accepting the two-point touch operation, subsequently, accept a touch operation entered while the two-point contact state is maintained as a first touch operation set in advance, and accept a touch operation that is entered while the two-contact state is maintained and that is different from the first touch operation as a second touch operation;
the first touch operation is a manual operation command for the equipment set in advance; and
the second touch operation is an automatic operation command for the equipment set in advance.

6. The operation device according to Claim 5, wherein
the operation device is configured to accept a touch operation of sliding at a first range speed as the first touch operation, and accept a touch operation of sliding at a speed faster than the first range speed as the second touch operation.

7. The operation device according to Claim 1, wherein:
the operation guide is formed in a linear shape having a predetermined length; and
the operation device is configured to, when accepting the two-point touch operation, accept a touch operation entered subsequently along the linear shape of the operation guide as the other touch operation set in advance.

8. An operation acceptance method by an operation device having a touch-sensitive operation surface installed in a vehicle, an operation guide corresponding to equipment mounted in the vehicle being formed on the touch-sensitive operation surface, the operation acceptance method comprising,
when accepting a two-point touch operation for the touch-sensitive operation surface, accepting an other touch operation entered subsequently as an operation command for the equipment.
